# EUROPEAN PATENT SPECIFICATION

(11) **EP 0 464 100 B1**
(45) Date of publication and mention of the grant of the patent: **15.09.1993**
(21) Application number: 90905243.3
(22) Date of filing: 23.03.1990
(51) Int. Cl.: A47J 31/10

(54) **LIQUID HEATING APPARATUS**
FLÜSSIGKEITSERHITZER
CHAUFFE-LIQUIDE

(30) Priority: 23.03.1989 GB 8906789
(43) Date of publication of application: 08.01.1992
(73) Proprietor: STRIX LIMITED, Ronaldsway, Isle of Man IM9 2RG (GB)
(72) Inventor: TAYLOR, John, Crawshaw, Balladoole Arbory Isle of Man (GB)
(74) Representative: Davies, Christopher Robert
(86) International application number: GB9000449
(87) International publication number: WO9011037

(56) References cited:
- FR-A- 2 124 943
- GB-A- 1 242 134
- GB-A- 2 143 625
- LU-A- 85 064

## Description

### LIQUID HEATING APPARATUS

This invention relates to liquid heating apparatus and more particularly to liquid heating apparatus of the kind in which liquid within a heating vessel is automatically drained from the vessel when the temperature of the liquid reaches a predetermined level. See GB-A-1 242 134.

There exists in the prior art liquid heating apparatus in the form of coffee making machines in which water within a heating vessel is heated to a predetermined temperature and then automatically drained from the vessel onto ground coffee within a filtering apparatus to produce a coffee beverage. Such machines have a drain valve in the base of the heating vessel. This drain valve is actuated by a cantilevered bimetallic strip disposed within the heating vessel. As the water within the heating vessel is gradually heated the bimetallic strip is also gradually heated by virtue of being immersed in the water. The construction and disposition of the bimetallic strip is such that it is intended to open the drain valve when the required water temperature (typically a nominal 95 degrees centigrade) is reached.

The heating vessel of such a coffee making machine is made of stainless steel and is heated by an external electric element brazed to its base. The current is supplied to the element through a thermally sensitive cut-out switch disposed in close contact with the wall of the heating vessel. This switch is calibrated with the intention that it should interrupt the current supplied to the element when the water temperature within the heating vessel is a few degrees below the temperature at which the drain valve should open. The residual heating effect of the element should then be sufficient to raise the temperature of the water to the level at which the drain valve opens.

If the machine is switched on without any water in the heating vessel then the element heats the heating vessel alone until it reaches the temperature at which the thermally sensitive cut-out switch operates to interrupt the current to the element. The machine is protected against malfunction of the switch by thermal fuses disposed in proximity to the element. The fuses are disposed such that if the element severely overheats, as could happen if the switch malfunctioned, then the thermal fuses would melt and interrupt the current to the element.

There exist a number of technical problems with the liquid heating apparatus of the type discussed above. One such problem is that it is difficult to calibrate the bimetallic strip with sufficient accuracy so that the drain valve opens at the correct temperature. In an application such as a coffee making machine it is particularly important that the drain valve should open at the correct temperature since the temperature of the water mixing with the ground coffee has a crucial effect on the taste of the coffee beverage produced.

Another problem with the coffee making machines of the prior art is that operation of the drain valve and the switch must be co-ordinated so that the current supplied to the element is interrupted before the drain valve is operated. This is necessary to avoid overheating that could be produced by continued operation of the element after the heating vessel has been emptied of water. It is also important that the switch does not interrupt the current to the element before the water has reached a sufficient temperature since if it did so the residual heating effect of the element might not be sufficient to cause the drain valve to open fully or perhaps even open at all. This requirement for the co-ordination of the operation of the drain valve and switch requires very close manufacturing tolerances for the valve and switch, which increases costs, and makes the production of such machines with consistent operating characteristics very difficult to achieve. A further problem is that as it is not possible to heat water beyond boiling point, if a valve is manufactured or its calibration drifts up to or beyond the boiling point then the valve will never function. If the temperature of the cut off switch is manufactured or if calibration drifts up to or beyond the boiling point then the vessel will boil dry as the water drains away with a resulting hissing and popping noise to the worry of the user.

Thus in the prior art machines the temperature of the water to be dispensed is directly sensed by the immersed bimetallic strip. Calibration difficulties with such strips inevitably lead to variations in the temperature of the water dispensed from machine to machine, and even for a particular machine the temperature may change with time as the calibration of a particular strip drifts. This leads to high return rates from the field and poor customer acceptance of existing machines.

The present invention provides a liquid heating apparatus comprising a heating vessel, and a drain valve controlled by an actuator for draining the liquid from the vessel, the actuator being disposed to sense the temperature of the liquid within an isolating chamberwherein a relatively small volume of liquid is partially isolated from the main volume of liquid within said vessel, the communication between the isolating chamber and the main volume of the heating vessel being such that, in use, the liquid within the main volume of the vessel is rapidly mixed with the liquid within the isolating chamber consequent upon the temperature of the main volume of the liquid within the vessel reaching a predetermined desired level where upon the actuator operates to open said valve, said apparatus including an electric heating element for said vessel and a switching mechanism for interrupting the electrical supply to said element, characterised in that said actuator further serves, upon operation to open said valve, also to operate said switching mechanism to interrupt the electrical supply to said element.

The operation of the actuator is dependent upon a rapid breakdown of the isolation of the liquid within the isolation chamber. During heating, the temperature of the isolated liquid lags behind that of the main volume. However, as the liquid within the main volume of the heating vessel is warmed it begins to circulate within the vessel. This circulation is the result of convection currents and local boiling adjacent the heating element, and increases in speed and extent as the liquid temperature rises until at a critical temperature the resulting agitation or turbulence becomes sufficient to cause the heated liquid to mix with or displace the liquid within the isolating chamber thus causing the temperature of the liquid within the isolating chamber to increase rapidly.

As there is now a large and rapid rise in temperature of the liquid whose temperature is sensed by the actuator, the operating temperature of the actuator is not critical and does not directly determine the temperature of the dispensed liquid; the actuator merely detects when the isolation of the small volume of liquid breaks down.

The temperature at which the liquid within the main volume of the vessel mixes with the liquid within the isolating chamber is dependent upon the nature of the communication between the main volume and the isolating chamber, as well as upon their relative dispositions, dimensions and shapes. The rate of heating of the liquid within the vessel has also been found to affect the temperature at which mixing takes place as does the watts density of the heating element by affecting the turbulence in the liquid.

The actual physical characteristics of the heating vessel and heater, which correspond to a particular desired dispensing temperature, may be found by experiment. Thereafter it will be appreciated that in manufacture these characteristics will be reproduced consistently and therefore the predetermined desired temperature at which the liquid in the heating vessel mixes with the liquid in the isolating chamber will also be consistently achieved.

According to the invention the operating temperature of the actuator may be, and preferably is, substantially below the predetermined desired temperature of the main volume of liquid at which this liquid mixes with the liquid within the isolating chamber.

Various configurations of isolating chamber are possible e.g. the isolating chamber could be formed as a lateral recess in the side wall of the heating vessel or be defined by internal baffles within the vessel. However, according to a preferred feature of the invention the isolating chamber comprises an open topped sump in the base of the heating vessel. Such an arrangement is particularly convenient since the drain valve and actuator may then be positioned together in the isolating chamber enabling them to be directly coupled in a simple and robust manner, with the drain valve in its optimum position at the lowest point in the heating vessel thereby ensuring the vessel is completely drained when the drain valve opens.

Although in one preferred arrangement the actuator is disposed within the isolating chamber in another it is disposed externally of the vessel so as to sense the temperature of the liquid within the isolating chamber. Again although the actuator may be directly coupled to the drain valve, indirect coupling is possible, such coupling being mechanical or electrical if the drain valve has to be operated electrically.

The actuator also controls the supply of heat to the heating vessel so that, in use, the actuator causes an interruption in the supply of heat to the heating vessel when the drain valve is opened. This feature provides the advantage that the control of the heat supply and the operation of the drain valve are reliably and accurately synchronised. This arrangement overcomes the technical problems concerning the co-ordination of drain valve operation and heat supply interruption discussed earlier.

The drain valve may take various forms such as a spool or rotary valve, but preferably the drain valve is in the form of a poppet valve. Such a valve is simple to construct and is unlikely to become jammed or stuck in one position due to the formation of deposits within the vessel.

Various thermally responsive actuators may be used, but preferably the actuator comprises a snap-acting bimetallic actuator. Such actuators are well-known and can be designed with a portion which undergoes a significant and rapid movement when a predetermined temperature is exceeded and which can exert a sufficient force to operate a simple drain valve directly.

In one particular preferred embodiment the valve is coupled to an over-center trip mechanism which when tripped interrupts the supply of heat to the heating vessel. Thus, a small movement of the valve member may be used to control the heating supply. This arrangement is particularly simple and reliable with an actuator of the bimetallic snap-acting type discussed above.

The vessel is heated by an electric element which may typically be an external electric element in thermal contact with the base thereof, with the current through the element being controlled by an electrical switch e.g. an over-center trip mechanism activated control switch. If, as in a preferred embodiment, movement of the valve member is utilised to operate the switch, it will be understood that the switch needs to be protected from liquid or vapour originating from the drain valve. Accordingly a flexible membrane may be provided between the drain valve outlet and the switch through which the valve member acts. For example the valve member of a poppet valve may abut one side of the flexible membrane and an operating arm of an over-center switch mechanism may abut the other side of the membrane. As the valve member moves it bears against the flexible membrane which in turn bears against the operating arm to cause the switch to be tripped thereby to interrupt the heat supply. Such an arrangement may be used to effectively isolate the switch from any liquid or vapour. The valve member could also be integral with the membrane.

As discussed above, the heat is supplied by an electric element. This element may be disposed within the heating vessel. However, preferably the heating element is brazed to the base of the heating vessel made from at least in part conductive material.

The actuator for the drain valve also controls, either directly or indirectly, the operation of a switch for the electrical supply to the heating element of the vessel. It is preferred that the actuator also serve as a protector in the event of the apparatus being switched on without there being any liquid in the vessel, and to this end it is necessary that the actuator should quickly respond to the heating of the element. It is therefore positioned in good thermal contact with a wall of the vessel forming part of the isolating chamber, and at least that part of the wall of the vessel is in good thermal contact with a section of the heating element. This objective is then served if the vessel is made of a metal having good thermal conductivity, e.g. aluminium, and the element is brazed to the vessel wall, e.g. the base, at least in part adjacent the actuator. If a vessel is manufactured from a low thermal conductivity material then a layer or section of good thermal conductivity material may be fixed externally to the vessel to provide the necessary thermal conduction path.

In this way the actuator can be made to serve three functions, namely to detect when the liquid has reached the desired temperature, to operate the drain valve and to act as a switch-on-dry protector.

With such an arrangement the heating apparatus may be further protected from overheating by the provision of additional back-up safety devices e.g. one or more thermal fuses adjacent the heating element, which are operative to interrupt the heating current if the element severely overheats in a switch-on-dry or boil-dry situation.

The invention also extends to an assembly for use with an electrically heated liquid heating apparatus comprising a heating vessel having a sump in the base thereof through which liquid is drained from said vessel, said sump constituting an isolating chamber wherein a relatively small volume of liquid is partially isolated from the main volume of liquid within the vessel, its communication between the isolating chamber and the main volume of the heating vessel being such that, in use, the liquid within the main volume of the vessel is rapidly mixed with the liquid within the isolating chamber consequent upon the temperature of the main volume of the liquid within the vessel reaching a predetermined desired value; said assembly being mountable to said sump externally of said vessel and comprising a drain valve, an actuator for said valve and a switching mechanism for interrupting the electrical supply to said apparatus, said actuator controlling said valve and being disposed, in use, in contact with the base of said sump to sense the temperature of liquid within said sump so as to operate when said rapid mixing takes place to open said valve and through the intermediary of said valve said switching mechanism.

It may be desirable to change the temperature of the liquid dispensed from the apparatus without having to change the geometry of the vessel or of the isolating chamber, or to vary the rate of heating. In order to do this, the main volume of the vessel may preferably be divided into separate chambers arranged such that, in use, liquid is heated at different rates in respective separate chambers, outlets of the separate chambers allowing liquid therein to be discharged together when the valve is opened by the turbulent mixing of liquid in one of the separate chambers with liquid in the isolating chamber, so that the temperature of the discharged liquid is intermediate the temperatures of the liquid within the separate chambers.

These separate chambers may be formed in many different ways, e.g. by using baffles, and in any number, but preferably there are two separate chambers, and these may advantageously be formed by a tubular open topped container extending upwardly from near the base of the vessel, so as to form an inner chamber and defining an outer chamber between the outer surface of the container and the inner surface of the vessel.

By using these separate chambers, the temperature of the dispensed liquid will also depend on these chambers shape and size. Therefore these arrangements allow heating apparatus to be produced which dispense liquid at different fixed temperatures merely by changing the shape of the separate chambers, thereby allowing greater flexibility in the manufacture of the apparatus.

However, in many circumstances it is desirable for each heating apparatus to be adjustable itself to dispense liquid of various temperatures over a range of values. To do this, it would be possible to provide means for varying the sizes and shapes of the vessel or, of the isolating chamber, or the connection therebetween, or even the heating rate. Preferably however, when the main volume of the vessel is divided into separate chambers as above, then an opening having an adjustable closure is provided between the chambers to allow a variable degree of liquid communication therebetween. By doing this, more rapidly heated liquid mixes with less rapidly heated liquid to a greater or lesser degree, thus increasing the final temperature of the less rapidly heated liquid, and so producing a higher or lower final temperature after mixing for the dispensed liquid.

A cover member may be provided to slidingly engage with the opening to an-adjustable extent, so that, when the cover moves relative to the opening, the extent to which the opening is opened is varied. Thus, if the heating apparatus is used in a coffee maker, a calibrated control may be provided for moving the cover member, which enables the user to vary the temperature at which water is dispensed, and so receive a cup of coffee brewed to the individual taste.

Preferably the separate chambers are of substantially constant relative cross-sectional area throughout their heights so as to maintain constant the ratio of mixing of the liquid from each chamber, during discharge.

Embodiments of the invention will now be described, by way of example only, with reference to the accompanying drawings in which:
Fig. 1 is a partially sectioned perspective underneath view of a first embodiment of the invention;
Fig. 2 is a section through a sump formed in the base of a second embodiment;
Fig. 3 is an underneath plan of a third embodiment of the invention;
Fig. 4 is a cross-sectional view taken along the line IV-IV of Fig. 3;
Fig. 5 shows a view taken in the direction of arrow V of Fig. 3;
Fig. 6 is a cross-sectional view taken along line VI-VI of Fig.3; and
Fig. 7 is a graph of temperature against time of the water in the sump of either of the first, second or third embodiments, and in the main volume of the vessel, as the water is heated from room temperature.

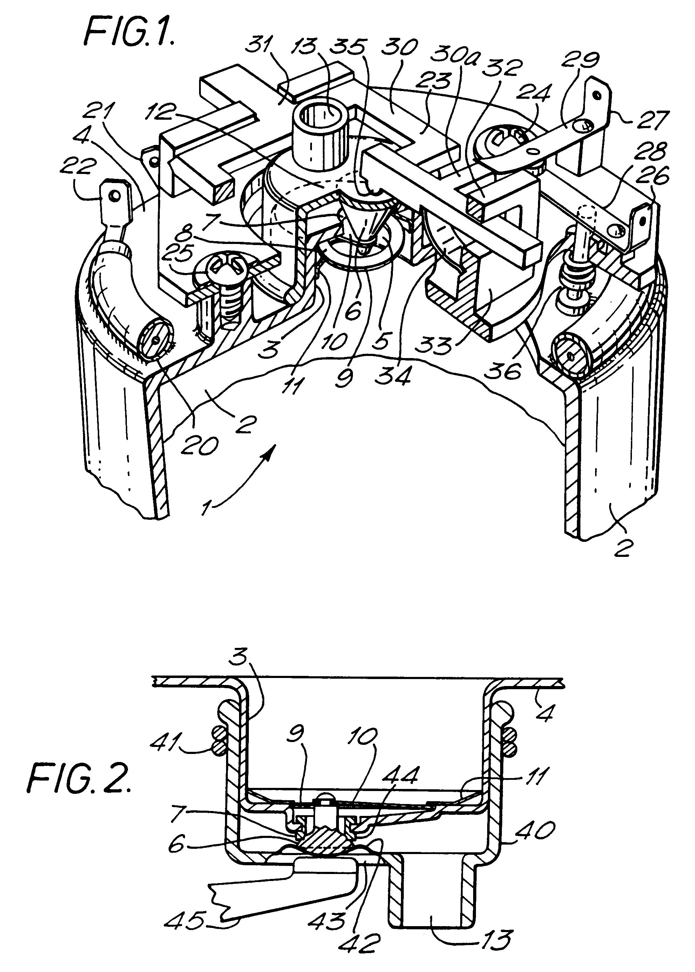

The liquid heating apparatus 1 shown in Fig. 1 includes an aluminium heating vessel 2 having an isolating chamber in the form of a sump 3 in the base 4 thereof. The vessel is shown inverted in Fig. 1, the sump 3 being at the bottom of the vessel in use. The vessel 2 may be open at the top but will generally be provided with a lid. A drain valve 5 is provided in the sump 3 which comprises a cone-shaped valve member 6 co-operating with a valve seat 7 formed in the base of the sump. In use, liquid in the vessel may be drained through drain valve 5 when the valve is opened by a thermally-responsive actuator 8 located in the sump 3. The actuator 8 comprises a stressed bimetallic disc 9 having a tongue 10 released therefrom by a generally v-shaped cut-out, the disc 9 being peripherally held in position in the sump 3 against the base thereof by an annular spring clip 11. Such actuators 8 are well known and can, as here, operate automatically with a snap-action between oppositely dished configurations with change in temperature.

A pip on the end of the valve member 6 of drain valve 5 engages in an aperture in the end of the bimetallic tongue 10 and is thus connected thereto. At temperatures in the region of room temperature the actuator adopts a dished configuration such that the tongue 10 pulls the valve member 6 into engagement with its seat 7 and the valve 5 is closed. At its operating temperature which will be significantly below the desired liquid temperature in the main body of the vessel, the disc 9 reverses its dished condition with a snap-action and the valve member is pushed away from its seat 7 to open the valve 5 and hold it open. After the liquid has been discharged, disc 9 will cool and eventually reset automatically to close the valve 5. If cold liquid were to be introduced into the vessel immediately after hot liquid had been discharged this would have the effect of almost instantly causing the disc 9 to snap back to its "cold" position and close the valve 5 with insignificant loss of liquid through the valve 5 before closure.

A flexible moulded cover or cap 12 having a drain outlet 13 integrally formed therewith fits over the sump 3 to guide water emerging through drain valve 5 into a cup or other receptacle. The valve member 6 is integral with the flexible cap 12. The flexible cap 12 forms a seal about the sump 3 and about a water exit pipe connected to the drain outlet 13, and thus serves to protect any control and switching mechanisms against liquid or vapour.

The vessel 2 is heated in use by means of an aluminium sheathed electric element 20 which is brazed to the base 4 of the vessel 2 and which is supplied with electricity through terminals 21 and 22. A switching mechanism designated generally as 23 is mounted in spaced relationship to the base 4 of vessel 2 by means of fixing screws 24 and 25 engaging in pillars integral with the base, and is arranged to interrupt the supply of electricity to the heating element 20 once the drain valve 5 is opened.

The switching mechanism 23 is provided with two electrical terminals 26 and 27, one of which is electrically connected to one of the terminals 21 or 22 of the heating element by a wire (not shown). The remaining two terminals are connected by means of a cord (not shown) to an electrical supply, which will usually be mains electricity.

The switching mechanism 23 comprises a fixed contact leaf 28 on which electrical terminal 26 is provided, a co-operating moving contact leaf 29 on which electrical terminal 27 is provided and an over-centre trip lever 30 which is arranged to break electrical contact between the contact leaves 28 and 29 by displacing the moveable contact leaf to switch the heating element 20 off when the drain valve 5 is opened. Trip lever 30 is pivotally mounted at one end 31 by a knife edge bearing on an abutment provided on a base portion of the switching mechanism 23 and is constrained to pivot between limiting positions defined by stops 32 and 33 located towards its other end. A stressed C-spring 34 is pivotally engaged at one end with trip lever 30 and at the other end with a further abutment provided on the base portion of the switching mechanism 23. This spring 34 holds the trip lever 30 in engagement with the other abutment and serves to bias trip lever 30 towards a position either abutting stop 32 or stop 33 through an unstable intermediate position. In the position engaging stop 32 the supply of electricity to the element is interrupted since a side arm 30a displaces contact leaf 29. The apparatus 1 is thus switched off.

The end of trip lever 30 remote from end 31 engages in a manually operable on/off knob (not shown) which provides means for manually switching the heating element 20 on by moving trip lever 30 downwardly (as seen in Fig 1) to a position against stop 33, or to manually switch the element 20 "off" by moving the trip lever 30 upwardly to lie against stop 32. When the trip lever 30 lies against stop 33 movable leaf spring 29 contacts fixed leaf spring 28 providing an electrical connection therebetween, and when trip lever 30 lies against stop 32 movable leaf spring 29 is disengaged from fixed leaf spring 28 interrupting the supply of electricity to heating element 20.

After operation, and as the apparatus cools down, the actuator 8 will snap back into a position in which the valve 5 is closed. C-spring 34, however, maintains the switch in an off position until the apparatus is manually switched on again.

A small projection 35 is provided on trip lever 30 adjacent flexible member 12 in the region of drain valve member 6. When, in use, the apparatus is switched on by manually operating a knob (not shown) to move trip lever 30 into a position against stop 33 such that electrical contact is made between leaf contacts 28 and 29, projection 35 is moved such that it abuts flexible member 12 adjacent valve closing member 6.

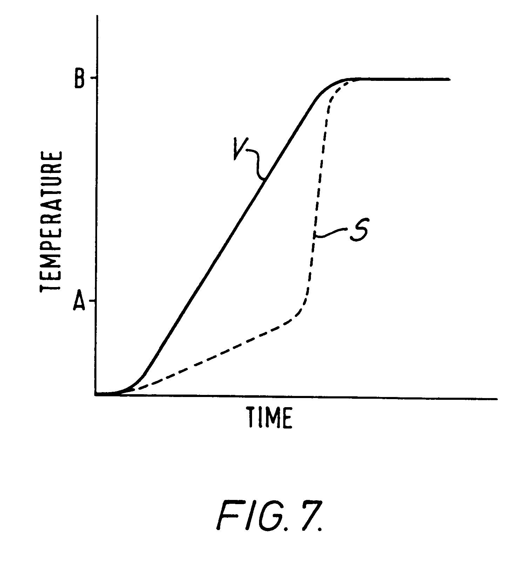

The temperature of the liquid, e.g. water, in the vessel 2 is raised as it is heated by element 20, as shown by curve "V" in Fig. 7. Since heat enters the water in the vessel 2 at a point above the sump 3, the temperature of the water in sump 3 does not rise as rapidly as the temperature of the water in the main part of vessel 2, as shown by curve "S" in Fig. 7. At this stage, the water in the sump 3 is heated by conduction through the vessel 2 with minimal mixing with the water in the main part of the vessel 2.

As the temperature of the water in the main part of the vessel is increased, turbulence in the vessel also increases until at a temperature B, which is determined by the dimensions of the vessel and the sump and by the rate of heating, there is sufficient agitation for the water in the main part of the vessel to mix with the water in the sump. A rapid rise in the temperature of the water in the sump follows. Immediately prior to this the temperature of the water in the sump is at the much lower value A.

In general the "sump effect" i.e. the difference between temperatures A and B increases with the depth of the sump and also with higher power input. For example, with a cylindrical sump having a diameter of 25 mm, a depth of 20 mm and a power input of 900 watts a rapid rise in the temperature of water in the sump was found to commence at 56°, and with a higher power input of 1170 watts the rapid rise occurred at a lower temperature of 45°. A very shallow or wide sump may show no sump effect at all, for example a sump having a depth of only 1 mm showed no rapid temperature rise at a power input of 900 watts.

The snap acting bimetallic actuator has a predetermined snap over temperature, at some point within the range A-B of rapid temperature rise, at which the tongue 10 will move rapidly towards seat 7. In addition to causing the valve 5 to open by moving valve member 6 away from seat 7, this movement of the actuator 8 and valve member 6 acts through flexible member 12 to move projection 35 and trip lever 30 towards stop 32. The combined effect of this force acting on projection 35 and the force of C-spring 34 acting on trip lever 30 trips the trip lever to a position adjacent stop 32 and switches the apparatus into an off position. Thus the movement of actuator 8 has the combined effect of opening drain valve 5 and interrupting the supply of electricity to the heating element 20.

Actuator 8 also acts as the primary switch-on-dry protector in that, by being held to the base of the sump 3, heat is conducted to it through the base 4 of the vessel and, particularly since the operating temperature of the actuator may be well below boiling point, the actuator will operate to interrupt the electrical supply in a switch-on-dry situation in good time to prevent damage to the apparatus.

In order to provide back-up protection against the vessel overheating by failure of the primary dry-switch-on protection the switching mechanism 23 incorporates a thermal fuse 36 which acts to interrupt the supply of electricity to the heating element 20 when the temperature of the vessel reaches a certain level. The thermal fuse 36 is in the form of a rod which abuts the base 4 of the vessel and has a narrowed portion which will melt once a predetermined temperature is exceeded. The fixed leaf contact 28 is naturally biased towards the base of the vessel but held away by the thermal fuse 36 so that if the narrowed portion melts then the upper portion of the fuse and the fixed leaf contact 28 bearing thereon move downwardly so that contact between leaf contacts 28 and 29 is broken. A single thermal fuse provides protection against a switch malfunction. The thermal fuse 36 interrupts the supply of electricity to the heating element 20 when the temperature of the vessel 2 is above the normal protection temperature but is still well within the operating temperature of conventional materials.

Fig. 2 shows a section through the sump of a second embodiment, in which parts which correspond to those in the first embodiment are designated by the same reference numerals. Only that part of the vessel below the base 4 is shown.

In this embodiment the flexible cap or cover 12 for guiding water through drain outlet 13 is replaced by a cap or cover 40, which is of similar shape but is not wholely flexible and is held to the outer wall of the sump 3 by means of clips 41. A flexible membrane 42 extends across an aperture 43 in this cover 40 adjacent valve member 6. In this embodiment, the valve member 6 is not integrally formed with the flexible membrane 42, and is seated on an annular seat 44 fitted in an aperture in the metal wall of the sump which is made of a material suitable to give a good seal when the valve is closed.

In the second embodiment an operating arm 45 forms part of an over-centre trip mechanism for a switch (not shown) which interrupts the supply of electricity to a heating element (not shown) when the valve is opened by the actuator 8. Valve member 6 acts through flexible membrane 42 to pivot operating arm 45 through its over centre position and switch the apparatus off. As the apparatus cools down again the actuator acts to close the drain valve. The switch (not shown) remains in an off position until reset to an on position by manual operation to move operating arm 45 back through its over centre position to the position shown in Fig. 2. The switch is arranged to reconnect the supply of electricity to the heating element when it is reset to an on position.

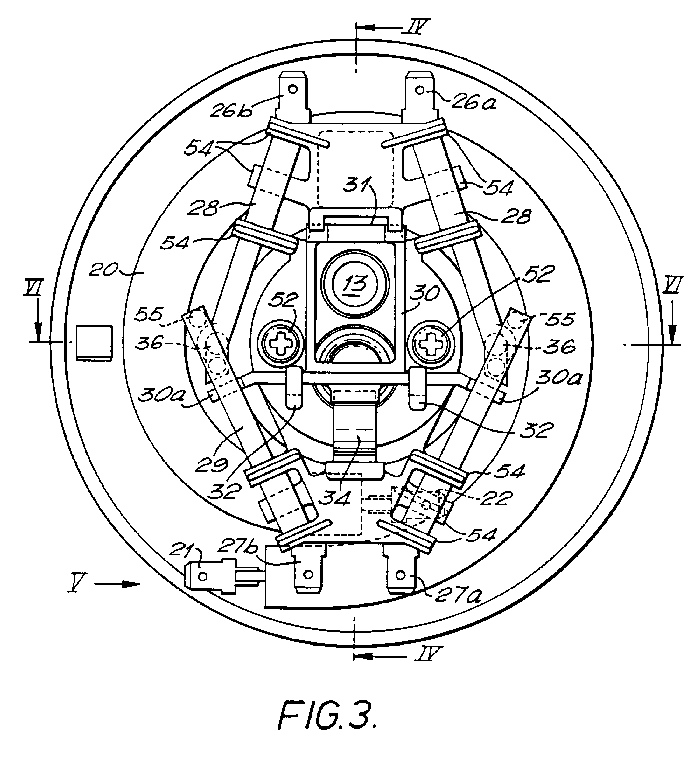

Referring now to Figures 3 to 6, in which the same reference numerals are used to designate parts corresponding to those in the first embodiment, a further third embodiment of the invention will now be described.

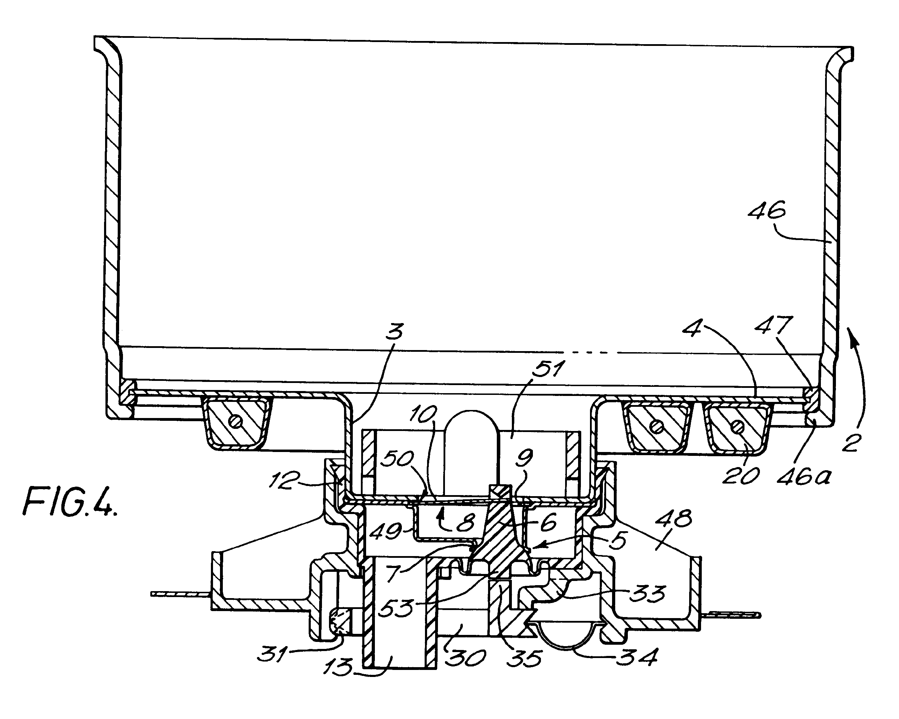

Figure 3 shows an underneath view of the heating apparatus according to this third embodiment, and Figure 4 shows a cross-section therethrough along lines IV-IV.

As in the first embodiment, a valve member 6 is integral with a flexible moulded cap 12, and is actuated by a bimetallic actuator 8 to trip an over-centre trip lever 30.

The heating vessel 2 is formed of a cylindrical body 46 having an inwardly facing flange 46a at its lower end. A base 4 is sealingly engaged to the flange 46a and has a sealing member 47 around its periphery. As in the previous embodiments, a heating element 20 is mounted on the underside of the base 4, and an isolating chamber 3 is formed in the base 4 to extend below the level of the element 20. A discharge port is provided in the base of the chamber 3 for discharge of the liquid.

A main tubular housing 48 is adapted to mount therewithin the moulded cap or cover 12 and together with cap 12 fits over the end of the chamber 3, the cap 12 lying between the chamber 3 and the housing 48 to provide a seal against leakage of liquid or steam and to channel the liquid through drain outlet 13 of the cap 12. The housing 48 and cap 12 are shouldered to engage around the end of the chamber 3 and this shoulder also supports and holds to the end of chamber 3 an intermediate disc-shaped member 49 provided with a sump opposite the discharge port in the chamber 3. An annular recess 50 in the member 49 surrounds the sump and locates the bimetallic disc 9 which is thus held to base of chamber 3 and underlies the discharge port in that chamber. A valve seat 7 for the valve member 6 is formed around an outlet port at the bottom of the sump of member 49. The end of the stem of the valve member 6 which extends through the sump of member 49 is connected to the central tongue 10 of the disc 9, as before. A thinned annular corrugation connects the valve member 6 to the surrounding portion of the cap or cover 12 to provide freedom for axial movement of the valve member 6 under the influence of the actuator 8.

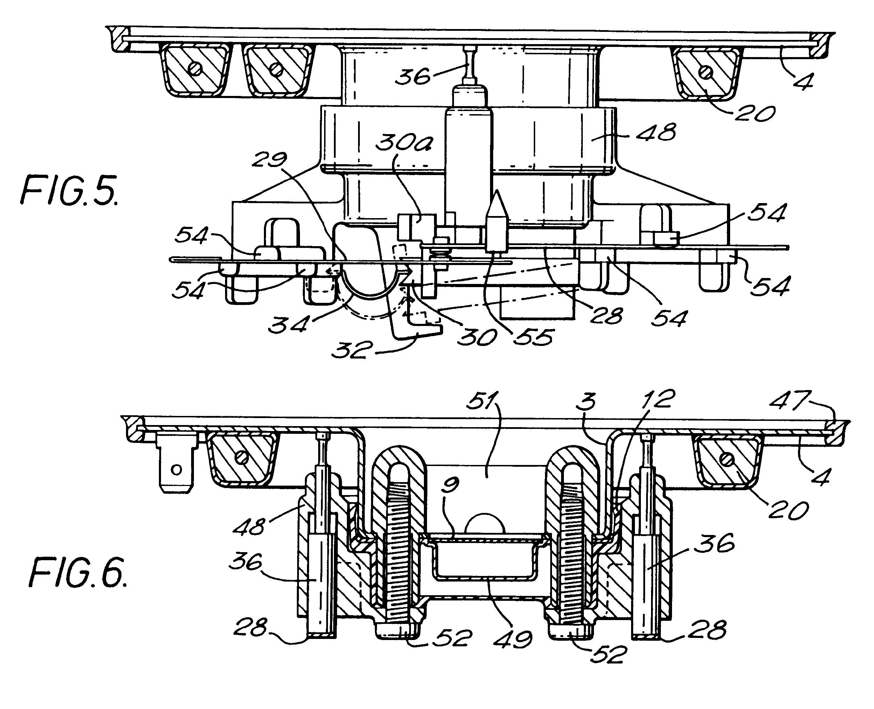

A connecting ring 51 fits within the isolating chamber 3 and is connected to the housing 48 by screws 52 (see Fig. 6), apertures being provided in the base of the chamber 3, the inner member 49 and the cap 12 to allow projecting cylindrical bosses of the connecting ring 51 to extend therethrough for engagement by the screws 52. When the screws 52 are tightened, the housing 48, cap 12 and the intermediate member 49 on the one side and the connecting ring 51 on the other are clamped firmly to the base of isolating chamber 3, the cap 12 serving as a seal to prevent escape of liquid except through said outlet 13. The bimetallic disc 9 is, of course, held loosely enough in the recess 50 to be able to snap between its two oppositely dished configurations.

The valve member 6 has a push button 53 formed on its base, on the outside surface of the cap 12. This push button 53 can abut against a projection 35 of over-centre lever 30, which forms part of a two pole switching mechanism for interrupting the electrical supply to the element 20. The switch mechanism is mounted on housing 48.

As before, the lever 30 is pivotally mounted at one end 31 on a knife edge bearing, and is pivotally engaged by a C-spring 34 at its other end. The lever 30 may be tripped by the push button 53 to move from a position abutting stop 33 to a position abutting stop 32 (see Fig. 5).

The lever 30 is of a rectangular frame shape and has arms 30a, at its end nearest the C-spring 34, which extend horizontally outwardly from either side.

When the lever 30 is tripped into its lower position, contacting stop 32, the side arms 30a, engage with contact leaves 29 to move them away from contact leaves 28, thus breaking the connections therebetween. As in the first embodiment, breaking these contacts interrupts the supply of electricity to the heating element 20.

In this embodiment a double pole switching mechanism is provided including two pairs of contact leaves 28,29 with associated terminals 26a, 27a; 26b, 27b. The contact leaves are each mounted between three spaced fingers 54 provided on housing 48. Terminals 27a and 27b will be connected to the two elements terminals 21, 22 whilst terminals 26a and 26b will be connected to the electrical supply by wires (not shown).

As before, the actuator 8 is operated either when there is a turbulent mixing between the hotter liquid in the main part of the vessel 2 and cooler liquid in the chamber 3, or when the apparatus has been switched on without having any liquid therein, and the base 4 has been heated to the temperature of operation of the actuator 8.

Once the actuator 8 has cooled down after tripping the lever 30, it will snap back into its normal position, leaving the lever 30 at its lower position until manually reset. The contact leaves 29 are biased towards the base 4 so that, when the lever 30 is reset, they will automatically move back into contact with leaves 28.

Thus the actuator 8 acts both to interrupt the current to the element 20 and to discharge the liquid and also acts a primary switch-on-dry protector. Again, however, as a further safety measure, thermal fuses are provided and, in this case, a pair of thermal fuses 36 are mounted on the main housing 48. As with the fuse of the first embodiment, these abut against the base 4, and have narrowed portions which melt once a predetermined temperature has been reached. The contact leaves 28, are biased, in the same way as contact leaves 29 in the direction of the base 4, but are held in a substantially horizontal position by the fuses 36. When the fuses 36 melt the contact leaves 28 will move upwardly towards the base 4 and break the connection with contact leaves 29, so interrupting the current to the element 20, thus providing extra protection should the actuator 8 or trip mechanism fail. Contact leaves 29 are prevented from following contact leaves 28 by stops 55 provided on the housing 48.

The use of a two pole switch mechanism backed up by two single pole thermal fuses makes this third embodiment a particularly safe construction.

It will be appreciated that in this embodiment the actuator, drain valve and switching mechanism may be supplied as an assembly mountable to the isolating chamber.

In a modification of the third embodiment, the ring 51 carries on upstanding supports a tubular open topped container e.g. formed integrally with the ring and ported in its lower region to put it into limited liquid communication only with the vessel 2. This container then separates the main volume of liquid into two separate chambers, an inner one defined by the inside of the container and an outer one defined between the outer surface of the container and the inner wall of the vessel.

The liquid in the outer chamber will be heated directly through base 4 by the element 20 and so will heat up relatively quickly. However the liquid in the inner chamber will only be heated indirectly, there being no substantial mixing of the liquid between the two chambers during heating.

When the temperature of the liquid in the outer chamber has risen high enough mixing, as before, will occur between the liquid therein and the liquid in the isolating chamber 3. The actuator 6 will then open the drain valve 5 and the liquid from the vessel will flow out via the drain outlet 13. During discharge, the liquid from the inner and outer chambers will mix to produce a final dispensed liquid of a temperature intermediate those of the liquid within the two chambers.

By using such an arrangement, the temperature of the liquid dispensed can be controlled by varying the relative sizes and shapes of the chambers, thus giving greater flexibility in the manufacture and use of the apparatus.

The container may be provided with openings or ports therein of adjustable size for allowing the liquid in the inner and outer chambers to mix to an adjustable degree. This adjustability would allow the liquid in the inner chamber to increase in temperature more or less rapidly. Thus, when the liquid was discharged by actuation of the valve 5 the temperature of the liquid in the inner chamber would be at a higher or lower value and so the final dispensed temperature of the liquid would be correspondingly higher or lower.

With a cylindrical container an outer rotatable sleeve could be provided to act as a sleeve valve to regulate the degree of communication between the inner and outer chambers and hence the temperature of the dispensed liquid.

Liquid heating apparatus in accordance with the invention may be incorporated in coffee or other beverage making appliances. The apparatus is particularly suited to heating small amounts of water e.g. a single cupful at a time.

## Claims

1. A liquid heating apparatus comprising a heating vessel (2), and a drain valve (5) controlled by an actuator (8) for draining the liquid from the vessel, the actuator (8) being disposed to sense the temperature of the liquid within an isolating chamber (3) wherein a relatively small volume of liquid is partially isolated from the main volume of liquid within said vessel (2), the communication between the isolating chamber (3) and the main volume of the heating vessel (2) being such that, in use, the liquid within the main volume of the vessel is rapidly mixed with the liquid within the isolating chamber consequent upon the temperature of the main volume of the liquid within the vessel reaching a predetermined desired level whereupon the actuator (8) operates to open said valve (5), said apparatus including an electric heating element (20) for said vessel and a switching mechanism (23) for interrupting the electrical supply to said element (20), characterised in that said actuator (8) further serves, upon operation to open said valve (5), also to operate said switching mechanism (23) to interrupt the electrical supply to said element (20).

2. A liquid heating apparatus according to claim 1, wherein the operating temperature of the actuator (8) to open said valve (5) is substantially below the predetermined desired temperature at which the liquid within the main volume of the vessel (2) mixes with the liquid within the isolating chamber (3).

3. A liquid heating apparatus according to claim 1 or 2, wherein said actuator (8) is positioned to respond quickly to the temperature of the heating element (20) in the event of the element being switched on without there being any liquid within the vessel (2).

4. A liquid heating apparatus according to claim 1,2 or 3, wherein the actuator (8) operates the switching mechanism (23) through the intermediary of said drain valve (5).

5. A liquid heating apparatus according to any preceding claim, wherein the switching mechanism (23) includes an overcentre trip mechanism (30) through which it is operated.

6. A liquid heating apparatus according to claim 4 or 5, wherein a valve member (6) or said valve (5) acts on said switching mechanism (23) through a flexible sealing membrane (42) protecting the switching mechanism from liquid draining through said valve.

7. A liquid heating apparatus according to claim 6, wherein said valve member (6) is formed integrally with said flexible membrane (42).

8. A liquid heating apparatus according to any preceding claim, wherein the actuator (8) is disposed within the isolating chamber (3).

9. A liquid heating apparatus according to any of claims 1 to 7, wherein said actuator (8) is disposed externally of said vessel in contact with said isolating chamber (3).

10. A liquid heating apparatus according to claim 9, wherein said actuator (8), drain valve (5) and switching mechanism (23) form an assembly mountable to said isolating chamber (Figures 3-6).

11. A liquid heating apparatus according to any preceding claim, wherein liquid drains from said vessel (2) through said isolating chamber (3).

12. A liquid heating apparatus as claimed in claim 11, wherein the isolating chamber comprises a sump (3) in the base of the vessel (2).

13. A liquid heating apparatus as claimed in any preceding claim, wherein the drain valve is in the form of a poppet valve (5-7).

14. A liquid heating apparatus as claimed in any preceding claim, wherein the actuator (8) comprises a snap-acting bimetallic actuator (9, 10).

15. A liquid heating apparatus as claimed in any preceding claim, wherein the vessel is heated by an external electric element (20) in thermal contact with the base thereof.

16. A liquid heating apparatus according to claim 15, wherein a thermal fuse (36) is provided adjacent the heating element (20) and is operative to interrupt the heating current to the element should the element overheat.

17. A liquid heating apparatus according to any preceding claim, wherein the main volume of the vessel (2) is divided into separate chambers arranged such that, in use, liquid is heated at different rates in respective separate chambers, outlets of the separate chambers allowing liquid therein to be discharged together when the valve (5) is opened by the turbulent mixing of liquid in one of the separate chambers with liquid in the isolating chamber (3), so that the temperature of the discharged liquid is intermediate the temperatures of the liquid within the separate chambers.

18. An assembly for use with an electrically heated liquid heating apparatus comprising a heating vessel (2) having a sump (3) in the base thereof through which liquid is drained from said vessel (2), said sump constituting an isolating chamber (3) wherein a relatively small volume of liquid is partially isolated from the main volume of liquid within the vessel (2), the communication between the isolating chamber (3) and the main volume of the heating vessel (2) being such that, in use, the liquid within the main volume of the vessel is rapidly mixed with the liquid within the isolating chamber consequent upon the temperature of the main volume of the liquid within the vessel reaching a predetermined desired value; said assembly being mountable to said sump externally of said vessel (2) and comprising a drain valve (5), an actuator (8) for said valve and a switching mechanism (23) for interrupting the electrical supply to said apparatus, said actuator (8) controlling said valve (5) and being disposed, in use, in contact with the base of said sump (3) to sense the temperature of liquid within said sump so as to operated when said rapid mixing takes place to open said valve (5) and through the intermediary of said valve said switching mechanism (23).

## Patentansprüche

1. Flüssigkeitserhitzer, umfassend ein Erhitzungsgefäß (2) und ein durch ein Stellglied (8) gesteuertes Ablaufventil (5) zum Ablassen der Flüssigkeit aus dem Gefäß, wobei das Stellglied (8) angeordnet ist, um die Temperatur der Flüssigkeit in einer Isolierkammer (3) zu erfassen, in welcher ein relativ kleines Flüssigkeitsvolumen von dem Hauptflüssigkeitsvolumen in dem Gefäß (2) teilweise isoliert ist, wobei die Verbindung zwischen der Isolierkammer (3) und dem Hauptvolumen des Erhitzungsgefäßes (2) derart ist, daß die Flüssigkeit in dem Hauptvolumen des Gefäßes im Gebrauch schnell mit der Flüssigkeit in der Isolierkammer durchmischt wird, nachdem die Temperatur des Hauptflüssigkeitsvolumens in dem Gefäß einen vorbestimmten gewünschten Wert erreicht hat, woraufhin das Stellglied (8) das Ventil (5) öffnet, wobei der Flüssigkeitserhitzer ein elektrisches Heizelement (20) für das Gefäß und einen Schaltmechanismus (23) zum Unterbrechen der elektrischen Zufuhr zu dem Element (20) umfaßt, dadurch gekennzeichnet, daß das Stellglied (8) nach dem Öffnen des Ventils (5) ferner zur Betätigung des Schaltmechanismus (23) dient, um die elektrische Zufuhr zu dem Element (20) zu unterbrechen.

2. Flüssigkeitserhitzer nach Anspruch 1, bei welchem die Betätigungstemperatur des Stellglieds (8) zum Öffnen des Ventils (5) im wesentlichen unterhalb der vorbestimmten gewünschten Temperatur liegt, bei welcher die Flüssigkeit in dem Hauptvolumen des Gefäßes (2) sich mit der Flüssigkeit in der Isolierkammer (3) vermischt.

3. Flüssigkeitserhitzer nach Anspruch 1 oder 2, bei welchem das Stellglied (8) derart angeordnet ist, daß es schnell auf die Temperatur des Heizelements (20) anspricht in dem Fall, daß das Element angeschaltet wird, ohne daß sich Flüssigkeit in dem Gefäß (2) befindet.

4. Flüssigkeitserhitzer nach Anspruch 1, 2 oder 3, bei welchem das Stellglied (8) den Schaltmechanismus (23) vermittels des Ablaufventils (5) betätigt.

5. Flüssigkeitserhitzer nach einem der vorhergehenden Ansprüche, bei welchem der Schaltmechanismus (23) einen Sprungauslösemechanismus (30) umfaßt, durch den er betätigt wird.

6. Flüssigkeitserhitzer nach Anspruch 4 oder 5, bei welchem ein Ventilelement (6) des Ventils (5) durch eine flexible Dichtungsmembran (42) auf den Schaltmechanismus (23) einwirkt, welche Dichtungsmembran (42) den Schaltmechanismus vor durch das Ventil ablaufender Flüssigkeit schützt.

7. Flüssigkeitserhitzer nach Anspruch 6, bei welchem das Ventilelement (6) einstückig mit der flexiblen Membran (42) ausgebildet ist.

8. Flüssigkeitserhitzer nach einem der vorhergehenden Ansprüche, bei welchem das Stellglied (8) innerhalb der Isolierkammer (3) angeordnet ist.

9. Flüssigkeitserhitzer nach einem der Ansprüche 1 bis 7, bei welchem das Stellglied (8) außerhalb des Gefäßes in Kontakt mit der Isolierkammer (3) angeordnet ist.

10. Flüssigkeitserhitzer nach Anspruch 9, bei welchem das Stellglied (8), das Ablaufventil (5) und der Schaltmechanismus (23) eine an der Isolierkammer anbringbare Anordnung bilden (Figuren 3 bis 6).

11. Flüssigkeitserhitzer nach einem der vorhergehenden Ansprüche, bei welchem die Flüssigkeit aus dem Gefäß (2) durch die Isolierkammer (3) abläuft.

12. Flüssigkeitserhitzer nach Anspruch 11, bei welchem die Isolierkammer eine Wanne (3) in der Basis des Gefäßes (2) umfaßt.

13. Flüssigkeitserhitzer nach einem der vorhergehenden Ansprüche, bei welchem das Ablaufventil in Form eines Tellerventils (5 - 7) vorliegt.

14. Flüssigkeitserhitzer nach einem der vorhergehenden Ansprüche, bei welchem das Stellglied (8) ein bimetallisches Schnappstellglied (9, 10) umfaßt.

15. Flüssigkeitserhitzer nach einem der vorhergehenden Ansprüche, bei welchem das Gefäß durch ein äußeres elektrisches Element (20) erwärmt wird, das sich in thermischem Kontakt mit dessen Basis befindet.

16. Flüssigkeitserhitzer nach Anspruch 15, bei welchem in der Nähe des Heizelements (20) eine Schmelzsicherung (36) vorgesehen ist, die den Heizstrom zu dem Element unterbricht, falls das Element überhitzen sollte.

17. Flüssigkeitserhitzer nach einem der vorhergehenden Ansprüche, bei welchem das Hauptvolumen des Gefäßes (2) in separate Kammern unterteilt ist, die derart angeordnet sind, daß im Gebrauch die Flüssigkeit in den jeweiligen separaten Kammern unterschiedlich schnell erwärmt wird, wobei Auslässe der separaten Kammern ein gemeinsames Ablassen der Flüssigkeit darin erlauben, wenn das Ventil (5) durch turbulentes Mischen von Flüssigkeit in einer der separaten Rammern mit Flüssigkeit in der Isolierkammer (3) geöffnet wird, so daß die Temperatur der abgegebenen Flüssigkeit zwischen den Temperaturen der Flüssigkeit in den separaten Kammern liegt.

18. Anordnung zur Verwendung bei einem elektrisch geheizten Flüssigkeitserhitzer, umfassend ein Heizgefäß (2) mit einer Wanne (3) in seiner Basis, durch welche Flüssigkeit aus dem Gefäß (2) abgelassen wird, wobei die Wanne eine Isolierkammer (3) bildet, in der ein relativ kleines Flüssigkeitsvolumen teilweise von dem Hauptflüssigkeitsvolumen in dem Gefäß (2) isoliert ist, wobei die Verbindung zwischen der Isolierkammer (3) und dem Hauptvolumen des Heizgefäßes (2) derart ist, daß sich die Flüssigkeit in dem Hauptvolumen des Gefäßes im Gebrauch schnell mit der Flüssigkeit in der Isolierkammer mischt, nachdem die Temperatur des Hauptflüssigkeitsvolumens in dem Gefäß einen vorbestimmten erwünschten Wert erreicht hat; wobei die Anordnung von der Außenseite des Gefäßes (2) an der Wanne anbringbar ist und ein Ablaufventil (5), ein Stellglied (8) für das Ventil und einen Schaltmechanismus (23) zum Unterbrechen der elektrischen Zufuhr zu dem Flüssigkeitserhitzer umfaßt, wobei das Stellglied (8) das Ventil (5) steuert und derart angeordnet ist, daß es zum Erfassen der Temperatur der Flüssigkeit in der Wanne im Gebrauch in Kontakt mit der Basis der Wanne (3) ist, um, wenn das schnelle Mischen stattfindet, das Ventil (5) zu öffnen und vermittels des Ventils den Schaltmechanismus (23) zu betätigen.

## Revendications

1. Appareil de chauffage de liquide, comprenant un récipient de chauffage (2) et une soupape d'évacuation (5) commandée par un organe de manoeuvre (8) afin qu'elle évacue le liquide du récipient, l'organe de manoeuvre (8) étant disposé afin qu'il détecte la température du liquide dans une chambre d'isolement (3) dans laquelle un volume de liquide relativement petit est isolé partiellement du volume principal de liquide du récipient (2), la communication entre la chambre d'isolement (3) et le volume principal du récipient de chauffage (2) étant telle que, pendant l'utilisation, le liquide du volume principal du récipient est rapidement mélangé au liquide de la chambre d'isolement lorsque la température du volume principal du liquide dans le récipient a atteint un niveau prédéterminé voulu, et l'organe de manoeuvre (8) provoque alors l'ouverture de la soupape (5), l'appareil comprenant un élément (20) de chauffage électrique destiné au récipient et un mécanisme d'interruption (23) destiné à interrompre l'alimentation électrique dudit élément (20), caractérisé en ce que l'organe de manoeuvre (8) est aussi utilisé, lors du fonctionnement pour l'ouverture de la soupape (5), pour la commande du mécanisme d'interruption (23) afin qu'il interrompe la transmission d'énergie électrique à l'élément (20).

2. Appareil de chauffage de liquide selon la revendication 1, dans lequel la température de fonctionnement de l'organe de manoeuvre (8) qui ouvre la soupape (5) est nettement inférieure à la température prédéterminée voulue à laquelle le liquide du volume principal du récipient (2) se mélange au liquide de la chambre d'isolement (3).

3. Appareil de chauffage de liquide selon la revendication 1 ou 2, dans lequel l'organe de manoeuvre (8) est disposé afin qu'il réponde rapidement à la température de l'élément de chauffage (20) en cas de fermeture de l'élément sans que du liquide soit présent dans le récipient (2).

4. Appareil de chauffage de liquide selon la revendication 1, 2 ou 3, dans lequel l'organe de manoeuvre (8) commande le mécanisme d'interruption (23) par l'intermédiaire de la soupape d'évacuation (5).

5. Appareil de chauffage de liquide selon l'une quelconque des revendications précédentes, dans lequel le mécanisme d'interruption (23) comprend un mécanisme (30) de déclenchement à genouillère par l'intermédiaire duquel il est commandé.

6. Appareil de chauffage de liquide selon la revendication 4 ou 5, dans lequel un organe obturateur (6) de la soupape (5) agit sur le mécanisme d'interruption (23) par l'intermédiaire d'une membrane flexible et étanche (42) qui protège le mécanisme d'interruption contre le liquide qui s'écoule dans la soupape.

7. Appareil de chauffage de liquide selon la revendication 6, dans lequel l'organe obturateur (6) est formé en une seule pièce avec la membrane flexible (42).

8. Appareil de chauffage de liquide selon l'une quelconque des revendications précédentes, dans lequel l'organe de manoeuvre (8) est disposé dans la chambre d'isolement (3).

9. Appareil de chauffage de liquide selon l'une quelconque des revendications 1 à 7, dans lequel l'organe de manoeuvre (8) est placé à l'extérieur du récipient au contact de la chambre d'isolement (3).

10. Appareil de chauffage de liquide selon la revendication 9, dans lequel l'organe de manoeuvre (8), la soupape d'évacuation (5) et le mécanisme d'interruption (23) forment un ensemble qui peut être monté dans la chambre d'isolement (figures 3 à 6).

11. Appareil de chauffage de liquide selon l'une quelconque des revendications précédentes, dans lequel le liquide est évacué du récipient (2) par l'intermédiaire de la chambre d'isolement (3).

12. Appareil de chauffage de liquide selon la revendication 11, dans lequel la chambre d'isolement comporte un puisard (3) formé à la base du récipient (2).

13. Appareil de chauffage de liquide selon l'une quelconque des revendications précédentes, dans lequel la soupape d'évacuation est sous forme d'une soupape à clapet (5-7).

14. Appareil de chauffage de liquide selon l'une quelconque des revendications précédentes, dans lequel l'organe de manoeuvre (8) est un organe bimétallique à déclenchement élastique (9, 10).

15. Appareil de chauffage de liquide selon l'une quelconque des revendications précédentes, dans lequel le récipient est chauffé par un élément électrique externe (20) qui est en contact thermique avec sa base.

16. Appareil de chauffage de liquide selon la revendication 15, dans lequel un fusible thermique (36) est placé près de l'élément de chauffage (20) et est destiné à interrompre le courant de chauffage transmis à l'élément en cas de surchauffe de l'élément.

17. Appareil de chauffage de liquide selon l'une quelconque des revendications précédentes, dans lequel le volume principal du récipient (2) est divisé en chambres séparées disposées de manière que, pendant l'utilisation, le liquide soit chauffé à des vitesses différentes dans les chambres séparées respectives, les sorties des chambres séparées permettant l'évacuation des liquides qu'elles contiennent simultanément, lorsque la soupape (5) est ouverte, par le mélange turbulent du liquide de l'une des chambres séparées avec le liquide de la chambre d'isolement (3), si bien que la température du liquide évacué est comprise entre les températures des liquides des chambres séparées.

18. Ensemble destiné à être utilisé avec un appareil de chauffage de liquide de type électrique, comprenant un récipient de chauffage (2) ayant un puisard (3) à sa base pour l'évacuation du liquide du récipient (2), le puisard constituant une chambre d'isolement (3) dans laquelle un volume relativement petit de liquide est isolé partiellement du volume principal du liquide présent dans le récipient (2), la communication entre la chambre d'isolement (3) et le volume principal du récipient de chauffage (2) étant telle que, pendant l'utilisation, le liquide du volume principal du récipient est mélangé rapidement au liquide de la chambre d'isolement après que la température du volume principal du liquide du récipient a atteint une valeur voulue prédéterminée, l'ensemble étant destiné à être monté sur le puisard à l'extérieur du récipient (2) et comprenant une soupape d'évacuation (5), un organe de manoeuvre (8) de la soupape et un mécanisme (23) d'interruption de l'alimentation électrique de l'appareil, l'organe de manoeuvre (8) commandant la soupape (5) et étant disposé au contact de la base du puisard (3) pendant l'utilisation de manière qu'il détecte la température du liquide dans le puisard et fonctionne lorsque le mélange rapide se produit en ouvrant la soupape (5) et commande le mécanisme interrupteur (23) par l'intermédiaire de la soupape.
